# FASCICULE DE BREVET EUROPEEN

(11) **EP 3 951 239 B1**
(45) Date de publication et mention de la délivrance du brevet: **07.06.2023**
(21) Numéro de dépôt: 21182252.3
(22) Date de dépôt: 29.06.2021
(51) Int. Cl.: F17C 5/02

(54) **DISPOSITIF ET PROCÉDÉ DE REMPLISSAGE DE GAZ LIQUÉFIÉ**
VORRICHTUNG UND VERFAHREN ZUM FÜLLEN MIT FLÜSSIGGAS
DEVICE AND METHOD FOR FILLING WITH LIQUEFIED GAS

(30) Priorité: 05.08.2020 FR 2008283
(43) Date de publication de la demande: 09.02.2022
(73) Titulaire: L'Air Liquide, société anonyme pour l'Étude et l'Exploitation des procédés Georges Claude, 75007 Paris (FR)
(72) Inventeur: PENNEC, Yann, 38360 SASSENAGE (FR); PETITPAS, Guillaume, 78350 LES LOGES-EN-JOSAS (FR)
(74) Mandataire: Air Liquide

(56) Documents cités:
- FR-A1- 3 017 183
- US-A1- 2014 261 867
- US-A1- 2016 281 927
- US-A1- 2017 030 522

## Description

L'invention concerne un dispositif et un procédé de remplissage de gaz liquéfié, en particulier d'hydrogène liquide. FR3017183A1 divulgue un tel dispositif.

L'invention concerne plus particulièrement un dispositif de remplissage de gaz liquéfié comprenant un circuit de fluide muni d'une première conduite de transfert de liquide comprenant une première extrémité destinée à être raccordée à une source de gaz liquéfié et une seconde extrémité destinée à être raccordée à un réservoir à remplir, une seconde conduite de transfert de gaz comprenant une première extrémité destinée à être raccordée à la source de gaz liquéfié et une seconde extrémité destinée à être raccordée audit réservoir à remplir, le circuit comprenant au moins une troisième conduite de transfert reliant les première et seconde conduites de transfert, et un dispositif d'évent raccordé aux première et seconde conduites de transfert via un ensemble de clapet(s) de sécurité, le circuit comprenant un ensemble de vanne (s) de contrôle des flux de fluide dans les conduites du circuit, le dispositif comprenant un système de balayage gazeux du circuit.

Actuellement, le remplissage de fluide cryogénique a lieu généralement par transfert entre deux réservoirs, soit à l'aide d'une pompe de transfert, soit par différence de pression (positive entre l'aval et l'amont). Par exemple, une station de gaz naturel liquéfié peut être remplie à partir d'un camion-citerne sur lequel se trouve une pompe de transfert. Il en est de même pour des fluides tels que l'azote liquide ou l'oxygène liquide. Pour des liquides cryogéniques très peu denses comme l'hydrogène ou l'hélium, une simple différence de pression permet d'atteindre des débits suffisants. Dans la majorité des cas, une surpression est créée dans le réservoir aval en vaporisant une partie du fluide. L'installation du réservoir aval (ou "client") assure plusieurs fonctions: stockage de molécule, pressurisation à l'aide d'un vaporisateur afin de fournir la molécule à l'application du client au débit et à la pression adéquate, réchauffage de la molécule en sortie de réservoir, inertage des lignes de transfert (entre le camion et le réservoir stationnaire) avant et après le transfert. Il est donc nécessaire d'avoir sur place (sur le site "client") de l'azote et de l'hydrogène gazeux ainsi que les contrôles associés (vannes, organes de sécurité, tuyauterie...), un système d'évacuation des reliquats de gaz à travers un évent dont la sortie est située en général au-dessus du réservoir, une connexion à la terre, un apport de gaz instrument pour les aspects sécurité... La majorité des installations cryogéniques sont des systèmes stationnaires de taille conséquente (quelques m3 à plusieurs dizaines de m3).

Les méthodes et les architectures actuelles, à très grande majorité industrielles, ne sont pas appropriées à une utilisation embarquée sur un véhicule. Transposer toutes les fonctions précitées d'une installation stationnaire vers le véhicule entraînerait en effet des contraintes trop fortes en terme de masse et volume embarqués supplémentaires.

L'inertage des lignes entre un camion et le réservoir nécessite un temps trop long pour un remplissage rapide (plus de 30 minutes). L'un des freins au développement des technologies d'hydrogène liquéfié embarqué est en partie dû à l'absence de solutions de remplissage facilement déployables et qui répondent aux besoins : inertage et purge de l'ensemble des lignes (flexibles ou fixes) et composants du système, évacuation de l'air par un gaz inerte sec (azote, argon, hélium...), remplissage de ces lignes par de l'hydrogène ou de l'hélium gazeux afin d'éviter que d'autres molécules gèlent. Un autre besoin est le contrôle des points froids du circuit pour contenir la formation d'air liquide (notamment, d'oxygène) et son contact avec des substances inflammables. Un autre besoin est le contrôle précis de la température d'injection du gaz liquéfié. Un autre besoin est un système d'évent dédié. Un autre besoin est la possibilité de flexibilité de la méthode de remplissage : soit une ligne de remplissage unique (remplissage dit « bilatéral »), soit avec deux lignes de remplissage : une pour le liquide arrivant, l'autre pour le gaz sortant (remplissage dit « unilatéral »). Un autre besoin est un contrôle centralisé en un endroit unique et notamment une sécurité (isolation du réservoir principal) à travers un bouton d'arrêt centralisé, une manipulation simple des vannes (si possible, non manuelle car les vannes cryogéniques manuelles sont en général difficiles à actionner). Un besoin supplémentaire est de pouvoir découpler (séparer) les fonctions du dispositif (stockage et livraison d'un côté) et les fonctions annexes d'autre part (comme l'inertage, ou l'évacuation des reliquats de fluide d'un autre côté).

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que le système de balayage comprend une première source de gaz sous pression, et un premier ensemble de conduite(s) de balayage reliant la première source de gaz sous pression en parallèle à la fois aux première (3) et seconde (6) conduites de transfert via un ensemble de vanne(s).

Par ailleurs, des modes de réalisation de l'invention peuvent comporter l'une ou plusieurs des caractéristiques suivantes :
- le système de balayage comprend une seconde source de gaz sous pression, et un second ensemble de conduite(s) de balayage reliant la seconde source de gaz sous pression en parallèle à la fois aux première et seconde conduites de transfert via un ensemble de vanne (5),
- le système de balayage comprend une troisième source de gaz sous pression, notamment de l'hydrogène, et troisième ensemble de conduite(s) de balayage reliant la troisième source de gaz sous pression en parallèle à la fois aux première et seconde conduites de transfert via un ensemble de vanne(s),
- le système de balayage comprend un organe d'aspiration, notamment une pompe à vide, et un quatrième ensemble de conduite(s) de balayage reliant l'organe d'aspiration à la fois aux première et seconde conduites de transfert via un ensemble de vanne(s),
- le système de balayage comprend au moins une conduite commune à tout ou partie des ensembles de conduite(s) de balayage,
- la première conduite de transfert de liquide comprend une vanne d'isolation et/ou de contrôle de débit,
- le ou les ensembles de conduite(s) de balayage sont reliés à la première conduite de transfert d'un côté ou de part et d'autre de la vanne d'isolation et/ou de contrôle de débit de la première conduite de transfert de liquide,
- la première conduite de transfert de liquide comprend un mélangeur liquide-gaz, le dispositif comprenant une source de gaz et une conduite d'injection de gaz reliant la source de gaz au mélangeur et munie d'un ensemble de vanne(s),
- le dispositif est disposé dans un carter ou boîtier, les extrémités de la première conduite de transfert de liquide ainsi que les extrémités de la seconde conduite de transfert de gaz étant reliées au boîtier par des raccords démontables,
- le dispositif comprend une source de gaz liquéfié raccordée à la première extrémité de la première conduite de transfert de liquide et à la première extrémité de la seconde conduite de transfert,
- la seconde conduite de transfert comprend une vanne de régulation de pression,
- la vanne de régulation de pression de la seconde conduite de transfert est configurée pour contrôler la pression dans le réservoir à remplir durant son remplissage en contrôlant la pression du flux de gaz sortant du réservoir via cette seconde conduite de transfert.
- la vanne de régulation de pression de la seconde conduite de transfert peut être fermée pour permettre une isolation de la conduite (6) de transfert à des fins notamment d'inertage et/ou de tests d'étanchéité.

L'invention concerne également un procédé de remplissage d'un réservoir de fluide cryogénique avec gaz liquéfié utilisant un dispositif selon l'une quelconque des caractéristiques ci-dessus ou ci-dessous, le procédé comprenant une étape de raccordement du réservoir aux secondes extrémités des première et seconde conduites de transfert, le procédé comprenant une étape de transfert de liquide dans le réservoir de liquide via la première conduite de transfert de liquide.

Selon d'autres particularités possibles le procédé comprend au moins l'une des étapes suivantes :
- -régulation du débit de liquide transféré dans le réservoir,
- -évacuation d'un débit de gaz du réservoir vers la source via la seconde conduite de transfert,
- réchauffage du flux de liquide transféré dans le réservoir au cours de l'étape de transfert par injection d'une quantité déterminée de gaz dans ledit flux de liquide,
- évacuation de gaz sous pression en excès dans le circuit via le dispositif d'évent.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue d'ensemble schématique et partielle illustrant un exemple de configuration et d'utilisation du dispositif de remplissage selon l'invention,
[Fig. 2] représente une vue schématique et partielle illustrant un exemple de configuration interne et d'utilisation du dispositif de remplissage selon l'invention,
[Fig. 3] représente une vue schématique et partielle illustrant un détail d'un mélangeur du dispositif de remplissage selon l'invention.

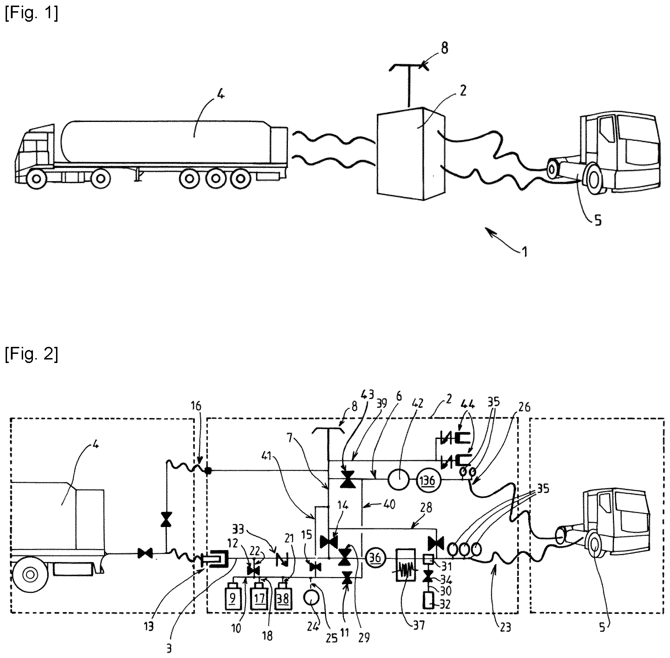

Comme illustré aux [Fig. 1] et [Fig. 2], le dispositif 1 de remplissage de gaz liquéfié comprend par exemple une circuiterie et des organes ou fonctions logés dans un boîtier 2 ou carter (fixe ou mobile). Cet ensemble 2 peut notamment constituer une station de remplissage à laquelle viennent se raccorder un réservoir 4 source de liquide (camion d'approvisionnement par exemple) et un réservoir 5 à remplir (camion dont le réservoir est à remplir par exemple).

Les raccords sont de préférence du type raccords rapides et les raccord cryogéniques peuvent être du type « Johnston » ou toute autre technologie appropriée. En particulier au niveau ou à proximité de ces raccords des systèmes de sécurité à clapet(s) à fermeture automatique (« breakaway ») peuvent être prévus en cas de traction accidentelle.

C'est-à-dire que cet ensemble 2 forme une interface entre un réservoir 4 de préférence mobile (la citerne de livraison par exemple) et l'application (véhicules 5 à remplir par exemple).

Comme visible à la [Fig. 2], le dispositif comprend un circuit de fluide muni d'une première conduite 3 de transfert de liquide comprenant une première extrémité 13 destinée à être raccordée à une source 4 de gaz liquéfié (notamment à la phase liquide d'un réservoir d'approvisionnement) et une seconde extrémité 23 destinée à être raccordée à un réservoir 5 à remplir (notamment à sa phase liquide).

La source 4 comprend typiquement un stockage de gaz liquéfié surmonté d'une phase gazeuse. La source est ou peut être mise sous pression, cette pression pouvant être la force motrice du fluide à transférer. Une pompe de transfert peut être envisagée également.

Le circuit comprend une seconde conduite 6 de transfert de gaz comprenant une première extrémité 16 destinée à être raccordée à la source 4 de gaz liquéfié (par exemple à sa phase gazeuse) et une seconde extrémité 26 destinée à être raccordée audit réservoir 5 à remplir (par exemple à sa phase gazeuse).

Le circuit comprend au moins une troisième conduite 7 de transfert reliée aux première 3 et seconde 6 conduites de transfert et munie d'une vanne 14. Cette troisième conduite 7 est prévue notamment pour collecter des gaz d'évent vers une évacuation (dispositif d'évent 8 décrit ci-après).

Le dispositif comprend en outre un dispositif d'évent 8 raccordé aux première 3 et seconde 6 conduites de transfert via un ensemble de clapet(s) de sécurité non représenté(s) (clapet(s) sensible(s) à la pression et configuré(s) pour évacuer une surpression anormale dans le circuit vers l'évent 8). L'évent 8 d'évacuation est situé de préférence au-dessus du dispositif mais peut être déporté si nécessaire. Il peut être utilisé également pour la dépressurisation des réservoirs 4 et 5.

Le circuit comprend un ensemble de vanne(s) de contrôle des flux de fluide dans les conduites du circuit. Par exemple, la première conduite 3 de transfert de liquide comprend une vanne 29 de contrôle de débit et/ou d'isolation.

Cette architecture permet des remplissages du réservoir 5 en simple flux (première conduite 3 de liquide uniquement) ou en double flux (première 3 conduite transférant du liquide et seconde 6 conduite évacuant du gaz).

Le circuit peut comprendre en outre une ligne 39 ayant une extrémité reliée au dispositif 8 d'évent (ou à la troisième conduite 7) et une ou plusieurs extrémités 44 munies d'organes de raccordement destinés à être raccordés par exemple pour accueillir les secondes extrémités 23 et 26 lorsqu'elles ne sont pas raccordées à un réservoir 5 à remplir. Dans la configuration où les secondes extrémités 23 et 26 sont raccordées aux extrémités 44, il est en outre possible de pré-refroidir les lignes, et/ou de dégivrer les extrémités 23, 26 et 44 afin d'éviter la formation de glace et/ou pour sécher les connecteurs.

La vanne 29 d'isolation et/ou de contrôle de débit est utilisée pour contrôler le débit principal de fluide (notamment, liquide) depuis le réservoir 4 vers le réservoir 5. La vanne 29 d'isolation et/ou de contrôle de débit peut être utilisée pour contrôler le retour gazeux du réservoir 5 à remplir (si remplissage en utilisant uniquement un simple flux) et/ou pour dépressuriser le réservoir 5 avant remplissage. Cette vanne 29 d'isolation et/ou de contrôle de débit peut être utilisée également à des fins d'inertage, et/ou pour réaliser des tests d'étanchéité de tout ou partie du circuit.

Sur la ligne de retour 6, un régulateur de pression 42 (de préférence une vanne de contrôle de pression) peut être prévue pour permettre de contrôler la pression dans le réservoir 5 durant le remplissage (flux de retour du réservoir 5). Ce régulateur de pression 42 peut le cas échéant aussi servir de vanne d'isolation, tout comme la vanne 43 qui peut être prévue en série à des fins d'inertage et/ou de tests d'étanchéité.

Cette vanne 42 de contrôle de pression de retour peut être utilisée pour l'inertage par dilution et la détection de fuite dans le circuit, le(s) réservoir(s) ou le(s) connecteur(s) des pistolets de remplissage.

Le dispositif comprend un système de balayage gazeux du circuit à des fins d'inertage, de purge ou de test de pression d'étanchéité.

Le système de balayage comprend une première source 9 de gaz sous pression, notamment de l'azote, et un premier ensemble de conduite(s) 10, 22, 7, 41, 40, 28 de balayage reliant la première source 9 de gaz sous pression en parallèle à la fois aux première 3 et seconde 6 conduites de transfert via un ensemble de vanne(s) 11, 12, 14, 15.

Le système de balayage comprend de préférence une seconde source 17 de gaz sous pression, notamment de l'hélium ou de l'hydrogène, et un second ensemble de conduite(s) 18, 7, 22, 40, 41, 28 de balayage reliant la seconde source 17 de gaz sous pression en parallèle à la fois aux première 3 et seconde 6 conduites de transfert via un ensemble de vanne (s) 11, 12, 14, 15. Cette seconde source 17 peut être utilisée pour l'inertage et/ou le réchauffement de tout ou partie du circuit et en particulier la conduite 3 de transfert de liquide cryogénique (température typiquement inférieure à 80K).

Le système de balayage comprend de préférence une troisième source 38 de gaz sous pression, notamment de l'hydrogène, et troisième ensemble de conduite(s) 21, 7, 22, 40, 41, 28 de balayage reliant la troisième source 38 de gaz sous pression en parallèle à la fois aux première 3 et seconde 6 conduites de transfert via un ensemble de vanne(s) 11, 12, 14, 15.

Le système de balayage peut comprendre également un organe 24 d'aspiration, notamment une pompe à vide, et un quatrième ensemble de conduite (s), 7, 22, 40, 41, 28 de balayage reliant l'organe 24 d'aspiration à la fois aux première 3 et seconde 6 conduites de transfert via un ensemble de vanne(s) 11, 15, 12, 14.

Comme illustré, le système de balayage peut comprendre au moins une conduite commune à tout ou partie des ensembles de conduite(s) de balayage.

Cette architecture permet facilement d'inerter par balayage et/ou dilution tout ou partie du circuit par l'un des gaz précités pour des opérations de test d'étanchéité, ou de purge ou de mise au vide par exemple. Une ou plusieurs des conduites de balayage peuvent également être utilisées pour dépressuriser le réservoir 5 (par exemple avant un remplissage utilisant uniquement un simple flux) et/ou refroidir tout ou partie des conduites du système.

Comme illustré, le ou les ensembles de conduite(s) de balayage sont reliés de préférence à la première 3 conduite de transfert de part et d'autre de la vanne 29 d'isolation et/ou de contrôle de débit de la première conduite 3 de transfert de liquide. Cette vanne 29 peut en particulier être configurée pour contrôler du débit de liquide entrant dans le réservoir du véhicule 5 à remplir. Un débitmètre 36 peut notamment être prévu en aval sur la conduite 3 pour le contrôle de la vanne 29 (contrôleur de débit massique intégré par exemple). La vanne 29 est de préférence commandée à distance et peut être du type à pointeau par exemple. La quantité de gaz de retour (revenant du réservoir 5 à remplir via la seconde conduite 6 de transfert) peut être mesurée par exemple par un second moyen de mesure de débit 136 si besoin disposé sur la seconde conduite 6 (par exemple un débitmètre massique). Ce moyen de mesure de débit 136 peut comporter un ou plusieurs débitmètres en parallèle afin d'augmenter sa gamme de mesure de débit et/ou optimiser le passage du fluide pour les besoins de pré-refroidissement du réservoir 5 à remplir, ou pour permettre une détection précise de fin de remplissage.

Un clapet anti-retour 33 peut être prévu sur la première 3 conduite de transfert, par exemple entre la première extrémité 13 et la vanne 29 d'isolation et/ou de contrôle de débit.

De même, un clapet anti-retour peut être prévu sur la seconde conduite 6 de transfert (non représenté par soucis de simplification).

Ceci permet des balayages distincts et indépendants des parties de circuit côté premières extrémités 13, 16 ou côté secondes extrémité 23, 26.

En particulier, cette architecture de circuit et vannes permet par exemple l'inertage de la première 3 conduite de transfert de liquide entre la source 4 de liquide et la vanne 29 d'isolation/ contrôle. Cette architecture permet également le balayage (inertage) du circuit situé dans la carter ou station 2 et du circuit d'évent jusqu'à l'évent 8. Cette architecture permet également le balayage (inertage) du circuit en partie aval (circuit côté du réservoir 5 à remplir) et le cas échéant l'inertage de ce réservoir 5.

Cette architecture permet également un balayage (inertage) de l'ensemble du circuit.

De même cette architecture permet de réaliser une pré-refroidissement de tout ou partie du circuit ou du réservoir 5 à remplir.

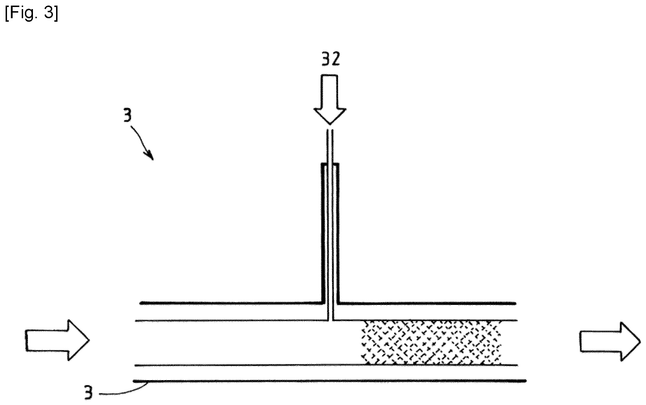

Comme illustré, la première conduite 3 de transfert de liquide comprend de préférence un mélangeur 31 liquide-gaz et une source 32 de gaz et une conduite 30 d'injection de gaz reliant la source 32 de gaz au mélangeur 31 et munie d'un ensemble de vanne(s) 34. Ceci permet un réchauffage du débit de liquide entrant avec un flux de gaz afin d'assurer des conditions de saturation (pression minimale dans le réservoir aval). Un exemple de mélangeur est illustré schématiquement à la [Fig. 3]. Du gaz sous pression (par exemple hydrogène à 300K et 5 à 10bar) est injecté via une conduite transversale dans la première conduite 3 de liquide (conduite de préférence isolée thermiquement sous vide) qui véhicule du liquide (par exemple hydrogène liquide à 21K et une pression entre 5 et 10 bar). Le mélange résultant en aval peut avoir une température déterminée par exemple de 28K et une pression similaire entre 5 et 10 bar. Le cas échéant, le gaz de vaporisation d'un des réservoirs peut être valorisé et réutilisé comme gaz de mélange.

Le dispositif peut comporter un ensemble de capteur(s) 35 de pression et/ou de température, par exemple au niveau des secondes extrémités 23, 26. Ces données de température et/ou de pression peuvent être utilisées pour automatiser tout ou partie des fonctions, par exemple pour la détection automatique d'un éventuel sur-remplissage du réservoir 5 rempli.

Cette structure permet une mutualisation des éléments et notamment une limitation du nombre de vannes et de composants cryogéniques isolés. Ces organes peuvent être localisés et regroupés dans une partie centrale du circuit. Tout ou partie des vannes et des capteurs sont de préférence commandés ou surveillés par une unité à distance.

Le dispositif présente de nombreux avantages et notamment il permet une mutualisation d'équipements de contrôle et de sécurité (évent 8, capteurs 35, vanne (s)...)

L'invention permet de limiter les organes embarqués sur le véhicule d'approvisionnement au strict nécessaire, et donc de maximiser la densité du système, tout en assurant l'ensemble des fonctions nécessaires, principales et secondaire. Le dispositif peut en outre être déplacé facilement.

Le dispositif peut comprendre en outre un compresseur de récupérations du gaz de vaporisation ( «boil off ») provenant du réservoir 5 à remplir ou d'un réservoir à température ambiante. Ce gaz récupéré et compressé peut être utilisé par exemple pour alimenter un échangeur réchauffeur, par exemple un réchauffeur 37 sur la première conduite 3 de transfert.

Le dispositif peut comprendre des connexions de mise à la terre (non représentées) entre les réservoir 4 et/ou 5 et le boîtier 2, afin d'assurer une équipotentialité entres les différents équipements. le carter ou boîtier 2 peut être lui-même relié à la terre.

Le dispositif peut comprendre des connexions de fluide de commande pneumatique (notamment, de l'azote), non représentées, entre les réservoir 4 et/ou 5 et le boîtier 2, afin de permettre un contrôle depuis le boîtier 2, en terme de sécurité et/ou de commande de l'ouverture et/ou de la fermeture par exemple de vanne(s) sur les réservoir 4 et/ou 5. De la même façon, un signal (électrique ou autre) peut être mis en place pour communiquer entre le boîtier 2 et le ou les réservoirs 4 et 5.

Ainsi, le dispositif peut le cas échéant comporter tout ou partie des caractéristiques ou fonctions suivantes:
- un contrôle centralisé du processus de remplissage/inertage/de la gestion de la sécurité...
- une utilisation de la vanne 42 de contrôle de pression retour pour l'inertage par dilution et la détection de fuite,
- une capacité distincte d'inertage des lignes vers le stockage 4 principal, du carter ou module 2 de transfert, du réservoir à remplir,
- une possibilité de mise en conditions opérationnelles du réservoir 5 à remplir (inertage et/ou mise en froid...),
- une valorisation des gaz de refroidissement ou de transfert comme gaz de mélange/réchauffage,
- une mesure du débit de gaz, notamment en sortie du réservoir 5 à remplir.

## Revendications

1. Dispositif de remplissage de gaz liquéfié comprenant un circuit de fluide muni d'une première conduite (3) de transfert de liquide comprenant une première extrémité (13) destinée à être raccordée à une source (4) de gaz liquéfié et une seconde extrémité (23) destinée à être raccordée à un réservoir (5) à remplir, une seconde conduite (6) de transfert de gaz comprenant une première extrémité (16) destinée à être raccordée à la source (4) de gaz liquéfié et une seconde extrémité (26) destinée à être raccordée audit réservoir (5) à remplir, le circuit comprenant au moins une troisième conduite (7) de transfert reliant les première (3) et seconde (6) conduites de transfert, et un dispositif d'évent (8) raccordé aux première (3) et seconde (6) conduites de transfert via un ensemble de clapet(s) de sécurité, le circuit comprenant un ensemble de vanne(s) (29) de contrôle des flux de fluide dans les conduites du circuit, le dispositif comprenant un système de balayage gazeux du circuit, **caractérisé en ce que** le système de balayage comprend une première source (9) de gaz sous pression, et un premier ensemble de conduite(s) (10, 22, 7, 40, 41, 28) de balayage reliant la première source (9) de gaz sous pression en parallèle à la fois aux première (3) et seconde (6) conduites de transfert via un ensemble de vanne(s) (11, 12, 14, 15).

2. Dispositif selon la revendication 1, **caractérisé en ce que** le système de balayage comprend une seconde source (17) de gaz sous pression, et un second ensemble de conduite(s) (18, 7, 40, 41, 22, 28) de balayage reliant la seconde source (17) de gaz sous pression en parallèle à la fois aux première (3) et seconde (6) conduites de transfert via un ensemble de vanne(s) (11,12, 14, 15).

3. Dispositif selon la revendication 2, **caractérisé en ce que** le système de balayage comprend une troisième source (38) de gaz sous pression, notamment de l'hydrogène, et troisième ensemble de conduite(s) (21, 7, 40) de balayage reliant la troisième source (38) de gaz sous pression en parallèle à la fois aux première (3) et seconde (6) conduites de transfert via un ensemble de vanne(s) (11, 12, 14 15).

4. Dispositif selon l'une quelconque des revendications 1 à 3, **caractérisé en ce que** le système de balayage comprend un organe (24) d'aspiration, notamment une pompe à vide, et un quatrième ensemble de conduite(s) (25, 7, 22, 40, 41, 28) de balayage reliant l'organe (24) d'aspiration à la fois aux première (3) et seconde (6) conduites de transfert via un ensemble de vanne(s) (11, 12, 14, 15).

5. Dispositif selon l'une quelconque des revendications 1 à 4, **caractérisé en ce que** le système de balayage comprend au moins une conduite (22) commune à tout ou partie des ensembles de conduite(s) de balayage.

6. Dispositif selon l'une quelconque des revendications 1 à 5, **caractérisé en ce que** la première conduite (3) de transfert de liquide comprend une vanne (29) d'isolation et/ou de contrôle de débit.

7. Dispositif selon la revendication 6, **caractérisé en ce que** le ou les ensembles de conduite(s) de balayage sont reliés à la première (3) conduite de transfert d'un côté ou de part et d'autre de la vanne (29) d'isolation et/ou de contrôle de débit de la première conduite (3) de transfert de liquide.

8. Dispositif selon l'une quelconque des revendications 1 à 7, **caractérisé en ce que** la première conduite (3) de transfert de liquide comprend un mélangeur (31) liquide-gaz, le dispositif comprenant une source (32) de gaz et une conduite (30) d'injection de gaz reliant la source (32) de gaz au mélangeur (31) et munie d'un ensemble de vanne(s) (34).

9. Dispositif selon l'une quelconque des revendications 1 à 8, **caractérisé en ce qu'**il est disposé dans un carter ou boîtier (2) et **en ce que** les extrémités (13,23) de la première conduite (3) de transfert de liquide ainsi que les extrémités (16,26) de la seconde conduite (6) de transfert de gaz sont reliées au boîtier par des raccords démontables.

10. Dispositif selon l'une quelconque des revendications 1 à 9, **caractérisé en ce qu'**il comprend une source (4) de gaz liquéfié raccordée à la première extrémité (13) de la première conduite (3) de transfert de liquide et à la première extrémité (16) de la seconde conduite (6) de transfert.

11. Dispositif selon l'une quelconque des revendications 1 à 10, **caractérisé en ce que** la seconde conduite (6) de transfert comprend une vanne (42) de régulation de pression.

12. Dispositif selon la revendication 11, **caractérisé en ce que** la vanne (42) de régulation de pression de la seconde conduite (6) de transfert est configurée pour contrôler la pression dans le réservoir (5) à remplir durant son remplissage en contrôlant la pression du flux de gaz sortant du réservoir (5) via cette seconde conduite (6) de transfert.

13. Dispositif selon la revendication 11 ou 12, **caractérisé en ce que** la vanne (42) de régulation de pression de la seconde conduite (6) de transfert peut être fermée pour permettre une isolation de la conduite (6) de transfert à des fins notamment d'inertage et/ou de tests d'étanchéité.

14. Procédé de remplissage d'un réservoir (5) de fluide cryogénique avec gaz liquéfié utilisant un dispositif selon l'une quelconque des revendications précédentes, le procédé comprenant une étape de raccordement du réservoir (5) aux secondes extrémités des première (3) et seconde (6) conduites de transfert, le procédé comprenant une étape de transfert de liquide dans le réservoir (5) de liquide via la première (3) conduite de transfert de liquide.

15. Procédé selon la revendication 14, **caractérisé en ce qu'**il comprend au moins l'une des étapes suivantes :
- régulation du débit de liquide transféré dans le réservoir (5),
- évacuation d'un débit de gaz du réservoir (5) vers la source via la seconde (6) conduite de transfert,
- réchauffage du flux de liquide transféré dans le réservoir (5) au cours de l'étape de transfert par injection d'une quantité déterminée de gaz dans ledit flux de liquide,
- évacuation de gaz sous pression en excès dans le circuit via le dispositif d'évent.

## Patentansprüche

1. Vorrichtung zum Befüllen mit Flüssiggas, umfassend einen Fluidkreislauf, der mit einer ersten Leitung (3) zum Transfer von Flüssigkeit ausgestattet ist, die ein erstes Ende (13) umfasst, das dazu vorgesehen ist, mit einer Flüssiggasquelle (4) verbunden zu sein, und ein zweites Ende (23), das dazu vorgesehen ist, mit einem zu befüllenden Behälter (5) verbunden zu sein, einer zweiten Leitung (6) zum Transfer von Gas, die ein erstes Ende (16) umfasst, das dazu vorgesehen ist, mit der Flüssiggasquelle (4) verbunden zu sein, und ein zweites Ende (26), das dazu vorgesehen ist, mit dem zu befüllenden Behälter (5) verbunden zu sein, wobei der Kreislauf mindestens eine dritte Transferleitung (7) umfasst, die die erste (3) und die zweite Transferleitung (6) verbindet, und eine Entlüftungsvorrichtung (8), die über eine Anordnung von Sicherheitsventil(en) mit der ersten (3) und der zweiten Transferleitung (6) verbunden ist, wobei der Kreislauf eine Anordnung von Ventil(en) (29) zum Steuern der Fluidströme in den Leitungen des Kreislaufs umfasst, wobei die Vorrichtung ein System zum Gasspülen des Kreislaufs umfasst, **dadurch gekennzeichnet, dass** das Spülsystem eine erste Druckgasquelle (9) und eine erste Anordnung von Spülleitung(en) (10, 22, 7, 40, 41, 28) umfasst, die die erste Druckgasquelle (9) über eine Anordnung von Ventil (en) (11, 12, 14, 15) parallel sowohl mit der ersten (3) als auch mit der zweiten (6) Transferleitung verbindet.

2. Vorrichtung nach Anspruch 1, **dadurch gekennzeichnet, dass** das Spülsystem eine zweite Quelle (17) für Druckgas und eine zweite Anordnung von Spülleitung(en) (18, 7, 40, 41, 22, 28) umfasst, die die zweite Druckgasquelle (17) über eine Anordnung von Ventil (en) (11, 12, 14, 15) parallel sowohl mit der ersten (3) als auch mit der zweiten Transferleitung (6) verbindet.

3. Vorrichtung nach Anspruch 2, **dadurch gekennzeichnet, dass** das Spülsystem eine dritte Quelle (38) für Druckgas, insbesondere für Wasserstoff, und eine dritte Anordnung von Spülleitung(en) (21, 7, 40) umfasst, die die dritte Druckgasquelle (38) über eine Anordnung von Ventil (en) (11, 12, 14, 15) parallel sowohl mit der ersten (3) als auch mit der zweiten (6) Transferleitung verbindet.

4. Vorrichtung nach einem der Ansprüche 1 bis 3, **dadurch gekennzeichnet, dass** das Spülsystem ein Ansaugorgan (24), insbesondere eine Vakuumpumpe, und eine vierte Anordnung von Spülleitung(en) (25, 7, 22, 40, 41, 28) umfasst, die das Ansaugorgan (24) über eine Anordnung von Ventil(en) (11, 12, 14, 15) sowohl mit der ersten (3) als auch mit der zweiten Transferleitung (6) verbindet.

5. Vorrichtung nach einem der Ansprüche 1 bis 4, **dadurch gekennzeichnet, dass** das Spülsystem mindestens eine Leitung (22) umfasst, die allen oder einem Teil der Anordnungen von Spülleitung(en) gemeinsam ist.

6. Vorrichtung nach einem der Ansprüche 1 bis 5, **dadurch gekennzeichnet, dass** die erste Flüssigkeitstransferleitung (3) ein Absperr- und/oder Durchflussregelventil (29) umfasst.

7. Vorrichtung nach Anspruch 6, **dadurch gekennzeichnet, dass** die Spülleitungsanordnung(en) mit der ersten Transferleitung (3) auf einer oder auf beiden Seiten des Absperr- und/oder Durchflussregelventils (29) der ersten Flüssigkeitstransferleitung (3) verbunden ist (sind).

8. Vorrichtung nach einem der Ansprüche 1 bis 7, **dadurch gekennzeichnet, dass** die erste Flüssigkeitstransferleitung (3) einen Flüssigkeit-Gas-Mischer (31) umfasst, wobei die Vorrichtung eine Gasquelle (32) und eine Gaseinspritzleitung (30) umfasst, die die Gasquelle (32) mit dem Mischer (31) verbindet und mit einer Anordnung von Ventil(en) (34) ausgestattet ist.

9. Vorrichtung nach einem der Ansprüche 1 bis 8, **dadurch gekennzeichnet, dass** sie in einem Gehäuse oder Kasten (2) angeordnet ist und dass die Enden (13, 23) der ersten Flüssigkeitstransferleitung (3) sowie die Enden (16, 26) der zweiten Gastransferleitung (6) über lösbare Verbindungen mit dem Gehäuse verbunden sind.

10. Vorrichtung nach einem der Ansprüche 1 bis 9, **dadurch gekennzeichnet, dass** sie eine Flüssiggasquelle (4) umfasst, die mit dem ersten Ende (13) der ersten Flüssigkeitstransferleitung (3) und mit dem ersten Ende (16) der zweiten Transferleitung (6) verbunden ist.

11. Vorrichtung nach einem der Ansprüche 1 bis 10, **dadurch gekennzeichnet, dass** die zweite Transferleitung (6) ein Druckregelventil (42) umfasst.

12. Vorrichtung nach Anspruch 11, **dadurch gekennzeichnet, dass** das Druckregelventil (42) der zweiten Transferleitung (6) dazu ausgelegt ist, den Druck in dem zu befüllenden Behälter (5) während seiner Befüllung zu steuern, indem es den Druck des Gasstroms, der über diese zweite Transferleitung (6) aus dem Behälter (5) austritt, steuert.

13. Vorrichtung nach Anspruch 11 oder 12, **dadurch gekennzeichnet, dass** das Druckregelventil (42) der zweiten Transferleitung (6) geschlossen werden kann, um eine Isolation der Transferleitung (6) insbesondere zu Zwecken der Inertisierung und/oder der Dichtheitsprüfung zu ermöglichen.

14. Verfahren zum Befüllen eines Behälters (5) für kryogenes Fluid mit Flüssiggas unter Verwendung einer Vorrichtung nach einem der vorangehenden Ansprüche, wobei das Verfahren einen Schritt des Verbindens des Behälters (5) mit dem zweiten Ende der ersten (3) und dem der zweiten Transferleitung (6) umfasst, wobei das Verfahren einen Schritt des Transfers von Flüssigkeit im Flüssigkeitsbehälter (5) über die erste Flüssigkeitstransferleitung (3) umfasst.

15. Verfahren nach Anspruch 14, **dadurch gekennzeichnet, dass** es zumindest einen der folgenden Schritte umfasst:
- Regulieren des Durchflusses der in den Behälter (5) transferierten Flüssigkeit,
- Ableiten eines Gasstroms aus dem Behälter (5) über die zweite Transferleitung (6) zur Quelle,
- Erwärmen des während des Transferschritts in den Behälter (5) transferierten Flüssigkeitsstroms durch Einspritzen einer bestimmten Gasmenge in den Flüssigkeitsstrom,
- Ableiten von überschüssigem Druckgas über die Entlüftungsvorrichtung in den Kreislauf.

## Claims

1. Device for filling with liquefied gas comprising a fluid circuit provided with a first pipe (3) for liquid transfer comprising a first end (13) that is intended to be connected to a source (4) of liquefied gas and a second end (23) that is intended to be connected to a tank (5) to be filled, a second pipe (6) for gas transfer comprising a first end (16) that is intended to be connected to the source (4) of liquefied gas and a second end (26) that is intended to be connected to said tank (5) to be filled, the circuit comprising at least one third transfer pipe (7) connecting the first (3) and second (6) transfer pipes, and a vent device (8) connected to the first (3) and second (6) transfer pipes via a set of one or more safety valves, the circuit comprising a set of one or more valves (29) for controlling the streams of fluid in the pipes of the circuit, the device comprising a system for gas flushing of the circuit, **characterized in that** the flushing system comprises a first source (9) of pressurized gas, and a first set of one or more flushing pipes (10, 22, 7, 40, 41, 28) connecting the first source (9) of pressurized gas in parallel both to the first (3) and second (6) transfer pipes via a set of one or more valves (11, 12, 14, 15).

2. Device according to Claim 1, **characterized in that** the flushing system comprises a second source (17) of pressurized gas, and a second set of one or more flushing pipes (18, 7, 40, 41, 22, 28) connecting the second source (17) of pressurized gas in parallel both to the first (3) and second (6) transfer pipes via a set of one or more valves (11, 12, 14, 15).

3. Device according to Claim 2, **characterized in that** the flushing system comprises a third source (38) of pressurized gas, in particular hydrogen, and a third set of one or more flushing pipes (21, 7, 40) connecting the third source (38) of pressurized gas in parallel both to the first (3) and second (6) transfer pipes via a set of one or more valves (11, 12, 14, 15).

4. Device according to any one of Claims 1 to 3, **characterized in that** the flushing system comprises a suction member (24), in particular a vacuum pump, and a fourth set of one or more flushing pipes (25, 7, 22, 40, 41, 28) connecting the suction member (24) both to the first (3) and second (6) transfer pipes via a set of one or more valves (11, 12, 14, 15).

5. Device according to any one of Claims 1 to 4, **characterized in that** the flushing system comprises at least one pipe (22) that is common to all or some of the sets of one or more flushing pipes.

6. Device according to any one of Claims 1 to 5, **characterized in that** the first pipe (3) for liquid transfer comprises an isolation and/or flow control valve (29) .

7. Device according to Claim 6, **characterized in that** the one or more sets of one or more flushing pipes are connected to the first transfer pipe (3) on one side or on either side of the isolation and/or flow control valve (29) of the first pipe (3) for liquid transfer.

8. Device according to any one of Claims 1 to 7, **characterized in that** the first pipe (3) for liquid transfer comprises a liquid-gas mixer (31), the device comprising a gas source (32) and a gas injection pipe (30) that connects the gas source (32) to the mixer (31) and is provided with a set of one or more valves (34).

9. Device according to any one of Claims 1 to 8, **characterized in that** it is disposed in a casing or housing (2) and **in that** the ends (13, 23) of the first pipe (3) for liquid transfer and the ends (16, 26) of the second pipe (6) for gas transfer are connected to the housing by removable connectors.

10. Device according to any one of Claims 1 to 9, **characterized in that** it comprises a source (4) of liquefied gas connected to the first end (13) of the first pipe (3) for liquid transfer and to the first end (16) of the second transfer pipe (6).

11. Device according to any one of Claims 1 to 10, **characterized in that** the second transfer pipe (6) comprises a pressure regulating valve (42).

12. Device according to Claim 11, **characterized in that** the pressure regulating valve (42) of the second transfer pipe (6) is configured to control the pressure in the tank (5) to be filled during filling thereof, by controlling the pressure of the gas stream leaving the tank (5) via this second transfer pipe (6).

13. Device according to Claim 11 or 12, **characterized in that** the pressure regulating valve (42) of the second transfer pipe (6) can be closed so as to allow the transfer pipe (6) to be isolated, in particular for the purposes of inerting and/or leaktightness tests.

14. Method for filling a cryogenic fluid tank (5) with liquefied gas using a device according to any one of the preceding claims, the method comprising a step of connecting the tank (5) to the second ends of the first (3) and second (6) transfer pipes, the method comprising a step of transferring liquid into the liquid tank (5) via the first pipe (3) for liquid transfer.

15. Method according to Claim 14, **characterized in that** it comprises at least one of the following steps:
- regulating the flow rate of liquid transferred into the tank (5),
- discharging a flow of gas from the tank (5) towards the source via the second transfer pipe (6),
- heating the stream of liquid transferred into the tank (5) during the transfer step by injecting a determined quantity of gas into said stream of liquid,
- discharging excess pressurized gas in the circuit via the vent device.
